# EUROPEAN PATENT SPECIFICATION

(11) **EP 1 525 492 B1**
(45) Date of publication and mention of the grant of the patent: **21.03.2018**
(21) Application number: 02730655.4
(22) Date of filing: 09.05.2002
(51) Int. Cl.: G01T 1/20

(54) **MULTI-ARRAY DETECTION SYSTEMS IN CT**
MEHRFACH-DETEKTORMATRIX FÜR CT-SYSTEM
SYSTEMES DE DETECTION MULTI-ENSEMBLES UTILISES EN TOMOGRAPHIE ASSISTE PAR ORDINATEUR

(43) Date of publication of application: 27.04.2005
(73) Proprietor: Koninklijke Philips N.V., 5656 AE Eindhoven (NL)
(72) Inventor: ZAHAVI, Opher, 38427 Hadera (IL); LEVENE, Simha, 85140 D.N. Hanegev (IL); DAFNI, Ehud, 38900 Caesaria (IL)
(74) Representative: Damen, Daniel Martijn
(86) International application number: PCT/IL2002/000360
(87) International publication number: WO 2003/096070

(56) References cited:
- EP-A- 0 378 896
- EP-A- 0 534 683
- US-A- 4 878 234

## Description

### FIELD OF THE INVENTION

The present invention is related to the field of solid-state detection systems for imaging applications, including x-ray computerized tomography and other imaging modalities where multiple arrays of detectors are used.

### BACKGROUND OF THE INVENTION

A typical solid-state detection system in computerized tomography (CT) is made up of many detection elements that cover a large area under the scanned subject, usually in two dimensions. Each element is a scintillator crystal mounted on a segment of a silicon photodiode, for example using an optical coupling adhesive. The detection elements convert the instantaneous attenuated x-ray beam into a set of corresponding electrical outputs, which are used to reconstruct an attenuation image of the scanned object. In multi-array detection systems, the active areas of the scintillators and photodiodes are divided into many small segments, which are physically aligned with each other and similar in size and active area. Each of the photodiode segments is connected by a conducting wire to signal processing circuitry. As one expands the detection area while maintaining the segment size, the number of such detection elements increases. In present designs of the diodes' substrate, this creates a "real estate" problem. There is limited free (non-active) area that can be used to embed the conducting wires without compromising the x-ray utility. For example, if the wire width plus the minimum spacing between wires from each detector element is 0.025 mm, and the wires from all the elements in a 16 line detector array of 16 elements per line form 16 layers, each made of 16 wires, running through a channel to one side of the array, then the channel will have to be at least 0.4 mm wide. For an array with sub-millimeter resolution, the channel will represent a significant area with no active photodiodes.

Another issue in packing large arrays of detection elements is the placement of the data acquisition system (DAS) electronics, which converts the output current from the photodiodes into digital signals. In order to reduce pick-up noise and save space it is desirable to minimize the size of the electronics by using ASICs, for example, and placing the ASICs as close as possible to the detector elements, eliminating wires or other connectors. However, in a large tiled array of detectors, the ASICs can only be placed on the rear side of the substrates opposite the detectors, where they are subject to radiation damage from the x-rays transmitted through the array.

US 4,878,234 A discloses a dental x-ray diagnostics installation for producing panorama tomo-grams of the jaw of a patient having a radiation source and a detector, which converts x-radiation into corresponding light radiation, disposed on opposite sides of the patient. The detector is preceded by a secondary diaphragm. The radiation source, the detector and the secondary diaphragm are rotated around the patient so that radiation attenuated by the jaw, and passing through the secondary diaphragm is incident on the detector. At least one CCD sensor is provided on which light radiation generated by the detector is incident. The CCD sensor converts the light radiation into electrical signals. The sensor has an image zone with a number of lines parallel to a longitudinal extent of the opening of the secondary diaphragm, and has a storage zone. The lines in combination receive all of the light radiation so as to generate a complete charge image corresponding to the x-radiation incident on the detector. A clock generator is provided which controls transfer of the charge from the lines of the image zone into the storage zone, and also controls read-out of the storage zone. By selecting the frequency of the clock pulses generated by the clock pulse generator, the transfer and read-out speed can be selected to simulate the speed of movement of x-ray film in a conventional dental panorama tomography apparatus.

EP 0 378 896 A2 discloses radiation detectors of a computed tomography scanner each having a radiation receiving face which is larger than a photosensitive face of a photodiode Lead wires connect the ends of the diode photosensitive surface to terminals. A scintillation crystal has an overhanging portion which overhangs at least the interconnection between the lead wires and the photosensitive face to protect the adjoining areas of the photosensitive face fro incident radiation. This enables the radiation receiving surface to be larger than the photosensitive surface. The crystal is either undercut to define the overhanging area or a section of light pipe is provided between the photosensitive surface and the crystal. Increasing the radiation receiving face decreases rotor ripple artifacts. Decreasing the photosensitive face area decreases diode capacitance and increases resistance which improves amplifier performance.

### SUMMARY OF THE INVENTION

In accordance with a first aspect, the invention provides a radiation detection system with the features of claim 1. In accordance with a second aspect, the invention provides a radiation detection system with the features of claim 29.

### BRIEF DESCRIPTION OF THE DRAWINGS

Exemplary embodiments of the invention are described in the following sections with respect to the drawings. The drawings are generally not drawn to scale. The same or similar reference numbers are used for the same or related features on different drawings. Features found in one embodiment can also be used in other embodiments, even though some features are not shown in all drawings. The drawings are:
Fig. 1 is a schematic side view of a detector array, according to the preamble of claim 1;
Fig. 2A is a schematic perspective view of a detector array, according to an exemplary embodiment of the invention;
Fig. 2B is a schematic top view of a photodiode array, according to the same embodiment of the invention, showing the photodiode elements and wiring;
Fig. 3A is a schematic side view of a scintillator array with light guides, according to another exemplary embodiment of the invention;
Fig. 3B is a schematic side view of a scintillator array and a photodiode array, without light guides, according to another exemplary embodiment of the invention.
Fig. 3C is a top view of a perforated reflector, sandwiched between a scintillator array and a photodiode array, for use in the embodiments of Fig. 3A and 3B;
Fig. 4 is a schematic side view of a detector array, according to the preamble of claim 1; and
Fig. 5A, Fig. 5B, Fig. 5C, and Fig. 5D are schematic perspective views of different tiling and tilting patterns of arrays, showing where the free edges are located.

### DETAILED DESCRIPTION OF EXEMPLARY EMBODIMENTS

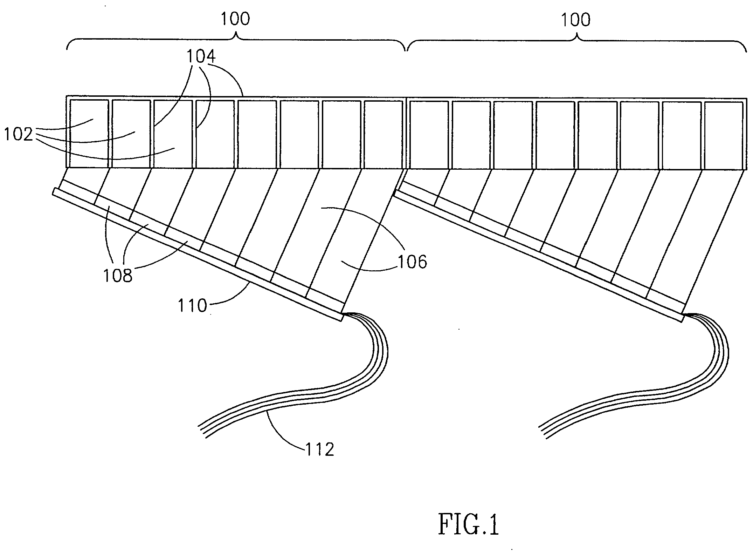

Fig. 1 shows a side view of two detector arrays 100. Typically, a large number of such arrays tile an x-ray detecting surface of CT scanner. An array of scintillators 102 is exposed to x-rays, and each scintillator emits many visible light photons every time it absorbs an x-ray photon. Each scintillator generally is covered on the top and sides by a reflective coating 104, for example a thin layer of aluminum, which reflects the emitted light until it reaches the bottom of the scintillator and enters a light guide 106 associated with that scintillator. Alternatively, instead of using a specular reflector like aluminum, the reflective coating is a diffusive reflector, for example, a white paint comprising titanium dioxide or any other material with a high reflectivity in the wavelength range of the light emitted by the scintillator.

The emitted light from each scintillator is carried by its light guide to a photodiode 108, which produces an output electric current that depends on the light power reaching it. All the photodiodes in each array 100 are arranged on a substrate 110. The currents from all the photodiodes in array 100 are carried in a bundle of wires 112, which brings the signals to a processor (not shown in Fig. 1) that converts said signals into digital data, and sends the digital data to a storage medium or to a computer for further processing. Because each array of photodiodes 108 and substrate 110 is tilted with respect to arrays of scintillators 102, there is room to attach wires 112 to the free end of each array of photodiodes, without the need for any break between the arrays of scintillators.

Optionally, the light guides 106 are light pipes of glass coated with a specularly reflective coating such as aluminum, or a diffusively reflective coating such as white paint. Alternatively or additionally, the light guides use total internal reflection to convey light from the scintillator to the photodiode, like prisms or individual optical fibers, and photons which enter light guide 106 at too steep an angle are lost. Alternatively, the light guides are fiber optic bundles. With this alternative, light entering the spaces between fibers will be lost, but the fiber optic bundles may be less expensive than light pipes. Even if the light guides are fairly inefficient at conveying light to the photodiodes, this need not increase the noise level of the detector array, since the noise level is likely to be dominated by x-ray quantum noise. Each 70 keV x-ray photon absorbed by the scintillator typically produces about 40,000 visible light photons. Even if only 10% of these photons reach the photodiode in the case of a solid light pipe, and only 2% of these photons reach the photodiode in the case of a fiber optic bundle light guide, there are still about 800 visible light photons detected for every x-ray photon, and the noise level due to visible photon statistics is about 28 times lower than the noise level due to x-ray photon statistics.

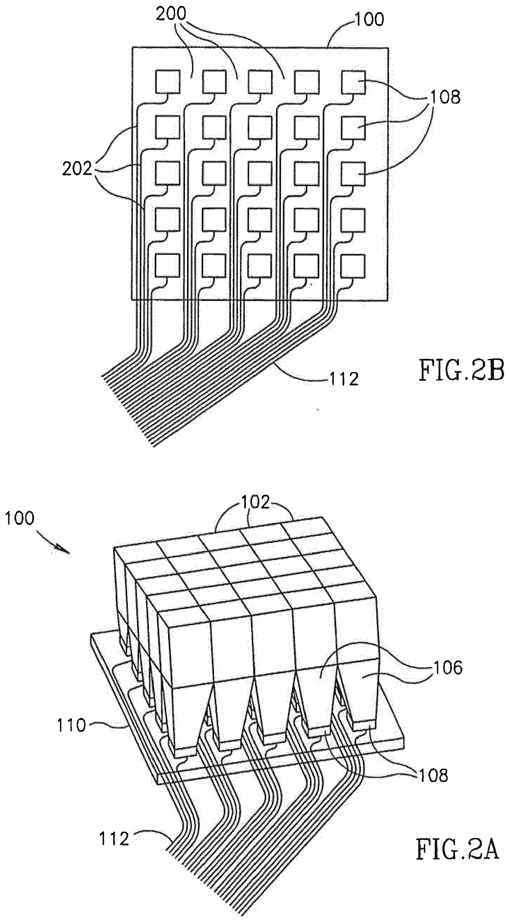

Fig. 2A shows a perspective view of an embodiment of a detector array 100, similar to the detector arrays shown in Fig. 1, including an array of scintillators 102, light guides 106, and an array of photodiodes 108 mounted on a substrate 110, tilted with respect to the array of the scintillators. In Fig. 2A, however, the photodiodes do not completely cover the substrate, but have active areas smaller than the cross-sectional area of the each scintillator, and light guides 106 are tapered in one or both directions, with cross-section matching the scintillator cross-section at the top, and matching the photodiode cross-section at the bottom. The cross-section of the light guide need not match the scintillator and photodiode cross-sections exactly, but it carries light most efficiently, and the most efficient use is made of the space on the photodiode array, if the cross-sections do match. Between the photodiodes are channels 200, which provide room for wires to run. Fig. 2B shows the array of photodiodes 108 seen face on, with channels 200, and wires 202 running in each channel, one wire connected to each photodiode. Fig. 2B shows only one example of how the wires can be routed. The wires are collected in a bundle 112 at the free edge of the array, as in Fig. 1.

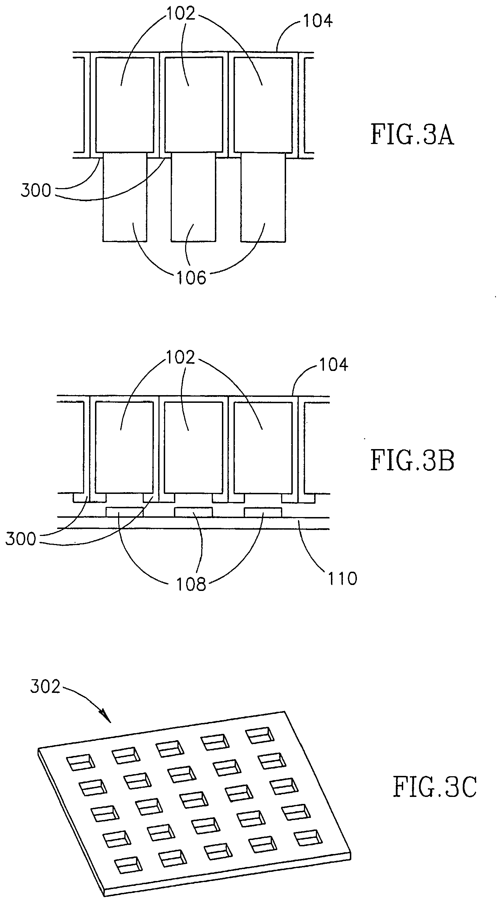

Fig. 3A shows a side view of a few scintillators 102 in an array, according to another embodiment of the invention similar to that of Fig. 2A, and light guides 106. In Fig. 3A, however, the light guides are not tapered, but have constant cross-section matching the tops of the photodiodes (not shown in Fig. 3A), which are smaller than the cross-sections of the scintillators. As in Fig. 2, the spaces between photodiodes are used to route wires connected to each photodiode. Each scintillator 102 is surrounded with a reflective layer 104, for example of white paint, including a bottom surface 300 of each scintillator 102, outside the part of the scintillator that is in contact with light guide 106. Light which strikes surface 300 is reflected back into scintillator 102, and then reflects from one of the other surfaces of scintillator 102, and generally finds its way to light guide 106 after only a small number of bounces, if it is not absorbed first. Once the light enters light guide 106, it is carried, with some loss, to the photodiode. Alternatively, the scintillator is covered with a specular reflector such as aluminum instead of a diffuse reflector such as white paint. However, depending on the shape of the scintillator, using specular reflectors leads in some cases to more reflections being required before the light reaches the light guide, and/or to greater losses per reflection.

Fig. 3B shows a schematic side view of a few scintillators of an array 102, and an array of photodiodes 108 on a substrate 110, according to another exemplary embodiment of the invention. As in Fig. 2 and Fig. 3A, the photodiodes are smaller in area than the scintillators, and the spaces between photodiodes are used to route wires. But unlike the embodiments in Fig. 2 and Fig. 3A, the photodiode array is not tilted with respect to the scintillator array, nor is the photodiode array a substantial distance away from the scintillator array, but the photodiode array is adjacent to the scintillator array. Optionally, each photodiode is in direct contact with an associated scintillator. Alternatively, there is a small gap between each photodiode and its associated scintillator, which light goes across. As in Fig. 3A, each scintillator is coated with a reflective material 104 on the top and sides, and a reflective material is also found on the part of the bottom surface 300 of each scintillator which is not in contact with or adjacent to a photodiode. Reflective material is optionally coated on each bottom surface 300. Alternatively, the bottom reflective material comprises a separate layer, with holes corresponding to the locations of the photodiodes, and this layer is sandwiched between the scintillator array and photodiode array. Fig. 3C shows such a perforated layer 302 of reflective material. Alternatively, reflective material is coated on a transparent layer which covers the photodiode array, in a pattern like that shown in Fig. 3C.

It should be understood that surface 300 is described as a "bottom" surface in Figs. 3A and 3B only because of its position in the drawings, and the parts of the detector array need not be oriented in this way with respect to gravity.

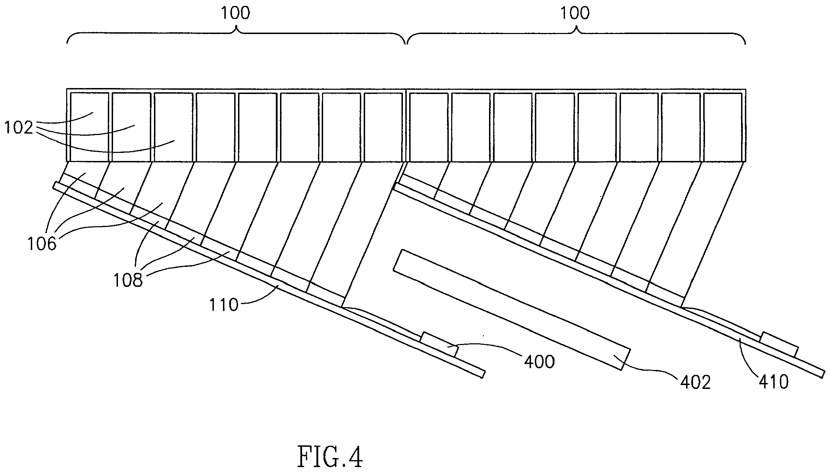

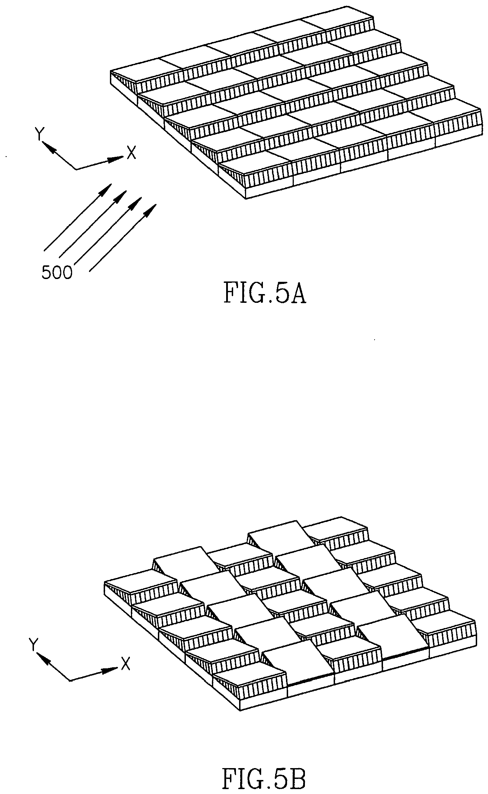

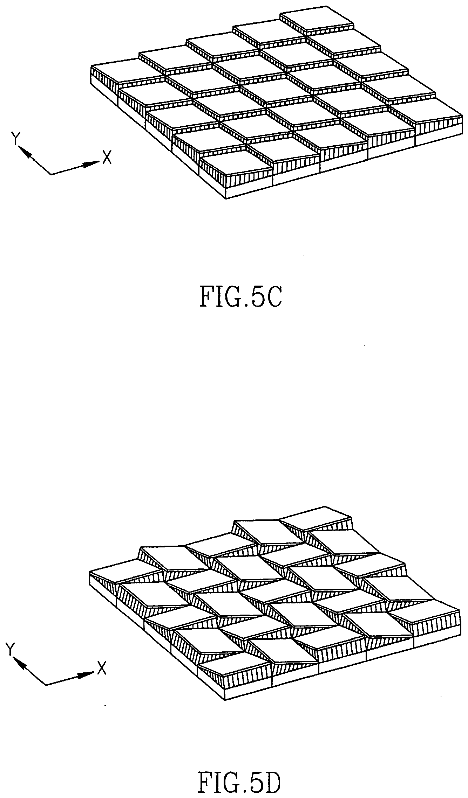

Fig. 4 shows a schematic side view of two detector arrays 100, similar to those in Fig. 1. In Fig. 4, in contrast to Fig. 1, the output signals from the photodiodes 108 are not carried by a bundle of wires to a processor some distance away from the photodiode array. Instead, in Fig. 4, there is an ASIC processor 400 mounted on the same substrate 110 as the photodiodes 108, extending a short distance to the side in the direction of the free edge of the substrate. The ASIC processor is thus behind the substrate 410 of the next array. Optionally, there is a radiation shield 402, between substrate 410 and ASIC processor 400, which protects ASIC processor 400 from damage by x-rays. The short distance from the photodiodes to the ASIC processor minimizes the pick-up noise in the output signal from the photodiodes. The output from the ASIC processor, being digital, is much less subject to degradation by pick-up noise than the analog signal going into the ASIC processor. Although Fig. 4 shows a single ASIC processor at one end of the photodiode array, there are configurations (see Fig. 5) where there are two or three free edges of the photodiode array and substrate. In these configurations, there are optionally two or three ASIC processors for each detector array, each located on an extension of the substrate in a different direction, optionally with a separate radiation shield covering each ASIC processor, or one radiation shield extending over all of them. The different ASIC processors optionally do different parts of the signal processing in parallel. Optionally, each ASIC processor processes output signals from the photodiodes nearest to it, in order to minimize the length of the wires carrying the output signal from the photodiodes.

Figs. 5A, 5B, 5C, and 5D show perspective views of tiled arrays, each showing different ways to tilt the arrays so that there are free edges for routing wire bundles as in Fig. 1, and/or for mounting ASIC processors as in Fig. 4. Figs. 5A-5D are schematic, showing the locations of the substrates and light guides, so that the locations of the free edges can be seen, without showing the individual photodiodes and scintillators. For convenience in describing the tilting patterns, the x and y axes of a Cartesian coordinate system are shown on each drawing. The scintillator arrays are in the x-y plane in each drawing, and the arrays are all square and are tiled in a regular Cartesian pattern, with four arrays meeting at a corner. The scintillator arrays are shown below the photodiode arrays in Figs. 5A-5D, for clarity. This is upside down with respect to Figs. 1, 2, 3 and 4, which show the scintillator arrays above the photodiode arrays. X-rays 500 are striking the scintillator array from below, as shown in Fig. 5A. This is true for Figs. 5B, 5C, and 5D as well, although the x-rays are not shown in those drawings.

In Fig. 5A, the photodiode arrays are all tilted the same way, in the positive y-direction. That is to say, a vector normal to the plane of the photodiode array, with positive z component (pointing generally upwards), will have a positive y component. In each photodiode array, the edge with the highest value of y is closest to the scintillator plane (lower down in the drawing), and the edge with the lowest value of y is furthest from the scintillator plane (raised up the most). In this tilting configuration, only the edge of each array with the lowest value of y is free. The edge with the highest y value is touching the light guides of the array adjacent to it, and the edges with the highest and lowest x values are touching the edges of the arrays adjacent to them.

In Fig. 5B, the arrays are alternating in their tilt, between the positive and negative y directions. All the arrays with a given range of x-coordinates are tilted in one way, and all the arrays adjacent to those arrays, in the x-direction on each side, are tilted the other way, at the same magnitude of the tilting angle. Then each array has one edge that is entirely free, and two edges (those with the highest and lowest x values) of which half the length is free.

In Fig. 5C, the arrays are all tilted in the same direction, at 45 degrees between the positive y and positive x directions. Then each array has two free edges, the edge with the lowest y value and the edge with the lowest x value.

In Fig. 5D, if the arrays were squares on a chess board, the black squares would be tilted in the positive y direction and the red squares would be tilted in the positive x direction. Then each array has two free edges, the edge with the lowest y value and the edge with the lowest x value.

There are many other possible tilting patterns. At each edge where two photodiode arrays meet, the array which is further from the scintillator plane will have a free edge, and the array which is closer to the scintillator plane will not. If both arrays are equally distant from the scintillator plane at that edge, so that they are touching each other, then neither edge will be free if the two arrays are oriented in the same direction. If there is a dihedral angle between two arrays that are touching each other, then either array can extend past the other one at that edge, or each array can extend past the other one over part of that edge. On the average, each array is free to extend past its neighbor over no more than half of its perimeter, although some of the arrays can have three or even all four edges free if other arrays have fewer than two edges free.

It should be understood that Figs. 5A-5D represent either a plane surface that is tiled with scintillator arrays, or part of a curved surface (for example, a cylinder or a sphere) tiled with scintillator arrays where the part of the curved surface shown has a width small enough compared to the radius of curvature to be approximated by a plane. When scintillator arrays tile a larger part of a curved surface, then it will not necessarily be possible to continue the regular Cartesian tiling pattern shown in Figs. 5A-5D, so the tilting patterns shown in Figs. 5A-5D might not be possible to continue over the whole region where there are scintillator arrays.

The term "scintillator" as used in the claims refers collectively to all of the scintillators if there is more than one of them. In the text, "scintillator" is sometimes used interchangeably with "scintillator element." The term "scintillator surface" as used in the claims refers to the coplanar surfaces of the portions of the scintillator associated with each photodetector element in a photodetector array, described in claim 1. The term does not include side surfaces of the scintillator, which may not be part of the same plane. The term "plane of the photodetector array" as used herein means "plane of the photodetector elements of the photodetector array." Although the elements have finite thickness in a direction normal to the plane in which they are arranged, the thickness is not very great, and their "plane" should be understood to mean any plane which intersects the same part of each element, for example its upper surface. The words "comprise", "include" and their conjugates as used herein mean "include but are not necessarily limited to".

## Claims

1. A radiation detection system comprising:
a plurality of photodetector arrays (100), each comprising a plurality of substantially coplanar photodetector elements (108);
a scintillator (102), at least a portion of which is associated with each photodetector element (108); and
a light guide (106) connecting each photodetector element (108) with its associated portion of the scintillator (102);
wherein surfaces of the portions of the scintillator associated with the photodetector elements (108) in each photodetector array (100) comprise a substantially coplanar surface, whose plane is not parallel to the plane of said photodetector elements (108); **characterized in that** at least two of the adjacent photodetector elements (108) in at least one photodetector array (100) have a gap between them, that each photodetector element (108) in said photodetector array (100) generates an output signal in response to light, and that the radiation detection system further includes at least one conductor (112), associated with each photodetector element (108) in said photodetector array (100), for carrying the output signal from said photodetector element (108), at least one of which conductors (112) is routed in said gap.

2. A radiation detection system according to claim 1, wherein at least one photodetector element (108) has a cross-sectional area in the plane of its photodetector array (100), projected onto the associated scintillator surface in a direction normal to the plane of said scintillator surface, which is smaller than the area of the surface of the portion of the scintillator (102) associated with said photodetector element (108).

3. A radiation detection system according to any of claims 1-2, wherein the cross-section of the light guide (106) connected to at least one photodetector element (108) does not extend beyond said photodetector element (108) at the surface where said light guide (106) and said photodetector element (108) are connected.

4. A radiation detection system according to any of claims 1-2, wherein the cross-section of the light guide (106) connected to at least one photodetector element (108) extends beyond said photodetector element (108) at the surface where light guide (106) and said photodetector element (108) are connected, and the part of said surface of said light guide (106) which extends beyond said photodetector element (108) is coated with a reflective material (104).

5. A radiation detection system according to any of the preceding claims, wherein the light guide (106) connected to at least one photodetector element (108) does not cover all of the surface of the portion of the scintillator (102) associated with said photodetector element (108).

6. A radiation detection system according to any of the preceding claims, wherein part of the scintillator is coated with a reflective material (104), in a location which is not in contact with any of the light guides (106).

7. A radiation detection system according to claim6, wherein the scintillator (102) is coated with a reflective material (104) on substantially all parts of the surface of the scintillator (102) which are not in contact with any of the light guides (106).

8. A radiation detection system according to any of the preceding claims, wherein the scintillator comprises a plurality of scintillator elements (102).

9. A radiation detection system according to claim 8, wherein, for at least one photodetector element (108), the portion of the scintillator associated with said photodetector element (108) comprises only one scintillator element (102).

10. A radiation detection system according to claim 8 or claim 9, wherein, for at least one scintillator element (102), only one photodetector (108) is associated with said scintillator element (102).

11. A radiation detection system according to any of claims 8-10, wherein the portions of the scintillator associated with the photodetector elements (108) of at least one photodetector array (100) comprise a regular array of scintillator elements (102).

12. A radiation detection system according to any of claims 8-11, wherein for at least one photodetector array (100), the photodetector elements (108) are associated one-on-one with scintillator elements (102).

13. A radiation detection system according to any of claims 8-12, wherein part of at least one scintillator element (102) is coated with a reflective material (104), in a location which is not in contact with any of the light guides (106).

14. A radiation detection system according to claim 13, wherein said scintillator element (102) is coated with a reflective material (104) in substantially all locations which are not in contact with any of the light guides (106).

15. A radiation detection system according to any of claims 4, 6,7, 13, or 14, wherein at least part of the reflective material (104) causes light to undergo substantially specular reflection.

16. A radiation detection system according to any of claims 4,6, 7, or 13-15, wherein at least part of the reflective material (104) causes light to undergo substantially diffuse reflection.

17. A radiation detection system according to any of claims 4,6, 7, or 13-16, wherein the reflective material (104) has a reflectivity greater than 80% at the wavelengths of light emitted by the scintillator.

18. A radiation detection system according to claim 17, wherein the reflective material (104) has a reflectivity greater than 90%, at the wavelengths of light emitted by the scintillator.

19. A radiation detection system according to claim 18, wherein the reflective material (104) has a reflectivity greater than 95% at the wavelengths of light emitted by the scintillator.

20. A radiation detection system according to any of the preceding claims, wherein at least one of the light guides (106) comprises a light pipe.

21. A radiation detection system according to any of the preceding claims, wherein at least one of the light guides (106) comprises an optical fiber.

22. A radiation detection system according to claim 21, wherein at least one of the light guides (106) comprises a bundle of optical fibers.

23. A radiation detection system according to any of preceding claims, wherein at least one photodetector array (100) has a free edge.

24. A radiation detection system according to claim 23 wherein at least one photodetector array (100) with a free edge has detector electronics (400) juxtaposed to said free edge.

25. A radiation detector system according to claim 24, wherein the detector electronics (400) comprise an ASIC.

26. A radiation detection system according to claim 24 or claim 25 and including a radiation shield (402) between said detector electronics (400) and a source of radiation that the radiation detection system is configured to detect.

27. A radiation detection system according to any of claims 23-26, and including a conductor bundle (112) carrying output currents from a plurality of photodetector elements (108) in at least one of the at least one photodetector arrays (100) with a free edge, wherein the conductor bundle (112) is routed along the free edge.

28. A radiation detection system according to any of the preceding claims, wherein the light guides (106) connecting said photodetector elements (108) to their associated scintillator portions follow substantially straight paths.

29. A radiation detection system comprising:
at least one photodetector array (100);
a scintillator comprising a first surface facing at least one of the at least one photodetector arrays (100), and at least one other surface not facing any of the at least one photodetector arrays (100); and
reflective material (104) covering a part but not all of the first surface and at least part of the at least one other surfaces;
wherein at least some light from the scintillator (102), which light strikes the part of the first surface not covered by the reflective material (104), passes through the first surface to one of the photodetector elements (108), and at least some light which strikes the part of the first surface covered by the reflective material (104) reflects from the reflective material back into the scintillator (102), and reaches one of the photodetector elements (108) after one or more reflections from the reflective material (104) adjacent to one of the at least one other surfaces,
**characterized in that** the at least one photodetector array (100) comprises a plurality of photodetector elements (108) and that at least two of the adjacent photodetector elements (108) in at least one photodetector array (100) have a gap between them, that each photodetector element (108) in said photodetector array (100) generates an output signal in response to light, and that the radiation detection system further includes at least one conductor (112), associated with each photodetector element (108) in said photodetector array (100), for carrying the output signal from said photodetector element (108), at least one of which conductors (112) is routed in said gap.

30. A radiation detection system according to claim 29, wherein at least one of the photodetector elements (108) receives some light which travels directly from the scintillator without reflecting from the reflective material (104), and some light which reflects from the reflective material (104) at least once.

31. A radiation detection system according to claim 29 or claim 30, wherein substantially all light from the scintillator passing through the first surface either reaches one of the photodetector elements (108), or reflects from the reflective material (104) back into the scintillator (102).

32. A radiation detection system according to any of claims 29-31, wherein at least one photodetector element (108) is in contact with the scintillator surface.

33. A radiation detector according to claim 32, wherein at least one of said at least one photodetector elements (108) is optically coupled with the scintillator surface by a layer of optical adhesive.

34. A radiation detection system according to any of claims 29-33, wherein at least one photodetector element (108) receives light from the scintillator surface through a light guide (106).

35. A radiation detection system according to any of claims 29-34, wherein at least part of the reflective material (104) is coated on the scintillator surface.

36. A radiation detection system according to any of claims 29-35, wherein at least part of the reflective material (104) comprises a layer located between the scintillator surface and the photodetector array (100).

37. A radiation detection system according to any of claims 29-36, wherein the reflective material (104) has a reflectivity greater than 80% at the wavelengths of light emitted by the scintillator.

38. A radiation detection system according to claim 37, wherein the reflective material (104) has a reflectivity greater than 90%, at the wavelengths of light emitted by the scintillator.

39. A radiation detection system according to claim 38, wherein the reflective material (104) has a reflectivity greater than 95% at the wavelengths of light emitted by the scintillator.

40. A radiation detection system according to any of claims 29-39, wherein the reflective material (104) comprises particles in a low refractive index medium.

41. A radiation detection system according to claim 40, wherein said particles comprise titanium dioxide.

42. A radiation detection system according to any of claims 29-39, wherein the reflective material (104) comprises particles of titanium dioxide.

43. A radiation detection system according to any of claims 29-42, wherein the parts of the first surface from which the photodetectors (108) of at least one photodetector array (100) receive light, are arranged on the first surface in a configuration substantially similar to the configuration of said photodetectors (108) in said photodetector array (100).

## Patentansprüche

1. Strahlungsdetektionssystem, umfassend:
eine Vielzahl von Fotodetektorarrays (100), jeweils umfassend eine Vielzahl von im Wesentlichen koplanaren Fotodetektorelementen (108);
einen Szintillator (102), wobei jedem Fotodetektorelement (108) mindestens ein Abschnitt des Szintillators zugeordnet ist; und
einen Lichtleiter (106), der jedes Fotodetektorelement (108) mit seinem zugehörigen Abschnitt des Szintillators (102) verbindet;
wobei Oberflächen der Abschnitte des Szintillators, die den Fotodetektorelementen (108) in jedem Fotodetektorarray (100) zugeordnet sind, eine im Wesentlichen koplanare Oberfläche umfassen, deren Ebene nicht parallel zu der Ebene von genannten Fotodetektorelementen (108) ist; **dadurch gekennzeichnet, dass** mindestens zwei der benachbarten Fotodetektorelemente (108) in mindestens einem Fotodetektorarray (100) eine Lücke zwischen sich haben, dass jedes Fotodetektorelement (108) in dem genannten Fotodetektorarray (100) in Reaktion auf Licht ein Ausgangssignal erzeugt, und dass das Strahlungsdetektionssystem weiterhin mindestens einen zu jedem Fotodetektorelement (108) in dem genannten Fotodetektorarray (100) gehörenden Leiter (112) zum Weiterleiten des Ausgangssignals von dem genannten Fotodetektorelement (108) umfasst, wobei mindestens einer dieser Leiter (112) in der genannten Lücke verlegt ist.

2. Strahlungsdetektionssystem nach Anspruch 1, wobei mindestens ein Fotodetektorelement (108) eine Querschnittsfläche in der Ebene seines Fotodetektorarrays (100) hat, die projiziert auf die zugehörige Szintillatoroberfläche in einer Richtung senkrecht zur Ebene der genannten Szintillatoroberfläche kleiner ist als die Fläche der Oberfläche des dem genannten Fotodetektorelement (108) zugeordneten Abschnitts des Szintillators (102).

3. Strahlungsdetektionssystem nach einem der Ansprüche 1 bis 2, wobei sich der Querschnitt des mit mindestens einem Fotodetektorelement (108) verbundenen Lichtleiters (106) an der Oberfläche, wo der genannte Lichtleiter (106) und das genannte Fotodetektorelement (108) verbunden sind, nicht über das genannte Fotodetektorelement (108) hinaus erstreckt.

4. Strahlungsdetektionssystem nach einem der Ansprüche 1 bis 2, wobei sich der Querschnitt des mit dem mindestens einen Fotodetektorelement (108) verbundenen Lichtleiters (106) an der Oberfläche, wo der Lichtleiter (106) und das genannte Fotodetektorelement (108) verbunden sind, über das genannte Fotodetektorelement (108) hinaus erstreckt, und der Teil der genannten Oberfläche des genannten Lichtleiters (106), der sich über das genannte Fotodetektorelement (108) hinaus erstreckt, mit einem reflektierenden Material (104) beschichtet ist.

5. Strahlungsdetektionssystem nach einem der vorhergehenden Ansprüche, wobei der mit mindestens einem Fotodetektorelement (108) verbundene Lichtleiter (106) nicht die gesamte Oberfläche des Abschnitts des Szintillators (102) abdeckt, der dem genannten Fotodetektorelement (108) zugeordnet ist.

6. Strahlungsdetektionssystem nach einem der vorhergehenden Ansprüche, wobei ein Teil des Szintillators an einer Stelle, die nicht in Kontakt mit einem der Lichtleiter (106) ist, mit einem reflektierenden Material (104) beschichtet ist.

7. Strahlungsdetektionssystem nach Anspruch 6, wobei der Szintillator (102) auf im Wesentlichen allen Teilen der Oberfläche des Szintillators (102), die nicht in Kontakt mit einem der Lichtleiter (106) sind, mit einem reflektierenden Material (104) beschichtet ist.

8. Strahlungsdetektionssystem nach einem der vorhergehenden Ansprüche, wobei der Szintillator eine Vielzahl von Szintillatorelementen (102) umfasst.

9. Strahlungsdetektionssystem nach Anspruch 8, wobei, für mindestens ein Fotodetektorelement (108), der dem genannten Fotodetektorelement (108) zugeordnete Abschnitt des Szintillators nur ein Szintillatorelement (102) umfasst.

10. Strahlungsdetektionssystem nach Anspruch 8 oder Anspruch 9, wobei, für mindestens ein Szintillatorelement (102), nur ein Fotodetektor (108) dem genannten Szintillatorelement (102) zugeordnet ist.

11. Strahlungsdetektionssystem nach einem der Ansprüche 8 bis 10, wobei die Abschnitte des Szintillators, die den Fotodetektorelementen (108) von mindestens einem Fotodetektorarray (100) zugeordnet sind, ein regelmäßiges Array von Szintillatorelementen (102) umfassen.

12. Strahlungsdetektionssystem nach einem der Ansprüche 8 bis 11, wobei, für mindestens ein Fotodetektorarray (100), die Fotodetektorelemente (108) eins-zu-eins Szintillatorelementen (102) zugeordnet sind.

13. Strahlungsdetektionssystem nach einem der Ansprüche 8 bis 12, wobei ein Teil von mindestens einem Szintillatorelement (102) an einer Stelle, die nicht in Kontakt mit einem der Lichtleiter (106) ist, mit einem reflektierenden Material (104) beschichtet ist.

14. Strahlungsdetektionssystem nach Anspruch 13, wobei das genannte Szintillatorelement (102) im Wesentlichen an allen Stellen, die nicht in Kontakt mit einem der Lichtleiter (106) sind, mit einem reflektierenden Material (104) beschichtet ist.

15. Strahlungsdetektionssystem nach einem der Ansprüche 4, 6, 7, 13 oder 14, wobei mindestens ein Teil des reflektierenden Materials (104) dazu führt, dass das Licht eine gerichtete Reflexion erfährt.

16. Strahlungsdetektionssystem nach einem der Ansprüche 4, 6, 7 oder 13 bis 15, wobei mindestens ein Teil des reflektierenden Materials (104) dazu führt, dass das Licht eine im Wesentlichen diffuse Reflexion erfährt.

17. Strahlungsdetektionssystem nach einem der Ansprüche 4, 6, 7 oder 13 bis 16, wobei das reflektierende Material (104) ein Reflexionsvermögen von mehr als 80 % bei den Wellenlängen des durch den Szintillator emittierten Lichts hat.

18. Strahlungsdetektionssystem nach Anspruch 17, wobei das reflektierende Material (104) ein Reflexionsvermögen von mehr als 90 % bei den Wellenlängen des durch den Szintillator emittierten Lichts hat.

19. Strahlungsdetektionssystem nach Anspruch 18, wobei das reflektierende Material (104) ein Reflexionsvermögen von mehr als 95 % bei den Wellenlängen des durch den Szintillator reflektierten Lichts hat.

20. Strahlungsdetektionssystem nach einem der vorhergehenden Ansprüche, wobei mindestens einer der Lichtleiter (106) ein Lichtrohr umfasst.

21. Strahlungsdetektionssystem nach einem der vorhergehenden Ansprüche, wobei mindestens einer der Lichtleiter (106) eine optische Faser umfasst.

22. Strahlungsdetektionssystem nach Anspruch 21, wobei mindestens einer der Lichtleiter (106) ein Bündel von optischen Fasern umfasst.

23. Strahlungsdetektionssystem nach einem der vorhergehenden Ansprüche, wobei mindestens ein Fotodetektorarray (100) eine freie Kante hat.

24. Strahlungsdetektionssystem nach Anspruch 23, wobei mindestens ein Fotodetektorarray (100) mit einer freien Kante Detektorelektronik (400) hat, die neben der genannten freien Kante angeordnet ist.

25. Strahlungsdetektionssystem nach Anspruch 24, wobei die Detektorelektronik (400) ein ASIC umfasst.

26. Strahlungsdetektionssystem nach Anspruch 24 oder Anspruch 25 und umfassend eine Strahlungsabschirmung (402) zwischen der genannten Detektorelektronik (400) und einer Quelle von Strahlung, für deren Detektion das Strahlungsdetektionssystem konfiguriert ist.

27. Strahlungsdetektionssystem nach einem der Ansprüche 23 bis 26, und umfassend ein Leiterbündel (112), das Ausgangsströme von einer Vielzahl von Fotodetektorelementen (108) in mindestens einem der mindestens einen Fotodetektorarrays (100) mit einer freien Kante weiterleitet, wobei das Leiterbündel (112) entlang der freien Kante verlegt ist.

28. Strahlungsdetektionssystem nach einem der vorhergehenden Ansprüche, wobei die Lichtleiter (106), die die genannten Fotodetektorelemente (108) mit ihren zugehörigen Szintillatorabschnitten verbinden, im Wesentlichen geraden Pfaden folgen.

29. Strahlungsdetektionssystem, umfassend:
mindestens ein Fotodetektorarray (100);
einen Szintillator umfassend eine erste Oberfläche, die mindestens einem der mindestens einen Fotodetektorarrays (100) zugewandt ist, und mindestens eine weitere Oberfläche, die nicht einem der mindestens einen Fotodetektorarrays (100) zugewandt ist; und
reflektierendes Material (104), das die erste Oberfläche teilweise, aber nicht vollständig abdeckt und die mindestens eine weitere Oberfläche mindestens teilweise abdeckt;
wobei mindestens etwas Licht von dem Szintillator (102), das auf den nicht mit dem reflektierenden Material (104) bedeckten Teil der ersten Oberfläche auftrifft, die erste Oberfläche zu einem der Fotodetektorelemente (108) durchquert, und mindestens etwas Licht, das auf den mit dem reflektierenden Material (104) bedeckten Teil der ersten Oberfläche auftrifft, von dem reflektierenden Material zurück in den Szintillator (102) reflektiert wird und nach einer oder mehreren Reflexionen von dem an eine der mindestens einen weiteren Oberflächen angrenzenden reflektierenden Material (104) eines der Fotodetektorelemente (108) erreicht,
**dadurch gekennzeichnet, dass** das mindestens eine Fotodetektorarray (100) eine Vielzahl von Fotodetektorelementen (108) umfasst und dass mindestens zwei der benachbarten Fotodetektorelemente (108) in mindestens einem Fotodetektorarray (100) eine Lücke zwischen sich haben, dass jedes Fotodetektorelement (108) in dem genannten Fotodetektorarray (100) ein Ausgangssignal in Reaktion auf Licht erzeugt, und dass das Strahlungsdetektionssystem weiterhin mindestens einen zu jedem Fotodetektorelement (108) in dem genannten Fotodetektorarray (100) gehörenden Leiter (112) zum Weiterleiten des Ausgangssignals von dem genannten Fotodetektorelement (108) umfasst, wobei mindestens einer dieser Leiter (112) in der genannten Lücke verlegt ist.

30. Strahlungsdetektionssystem nach Anspruch 29, wobei mindestens eines der Fotodetektorelemente (108) etwas Licht empfängt, das sich direkt von dem Szintillator ohne Reflexion von dem reflektierenden Material (104) ausbreitet, und etwas Licht empfängt, das mindestens ein Mal von dem reflektierenden Material (104) reflektiert wird.

31. Strahlungsdetektionssystem nach Anspruch 29 oder Anspruch 30, wobei im Wesentlichen alles Licht von dem Szintillator, das die erste Oberfläche durchquert, entweder eines der Fotodetektorelemente (108) erreicht oder von dem reflektierenden Material (104) zurück in den Szintillator (102) reflektiert wird.

32. Strahlungsdetektionssystem nach einem der Ansprüche 29 bis 31, wobei mindestens ein Fotodetektorelement (108) in Kontakt mit der Szintillatoroberfläche ist.

33. Strahlungsdetektor nach Anspruch 32, wobei mindestens eines der genannten mindestens einen Fotodetektorelemente (108) durch eine Schicht aus optischem Klebstoff optisch mit der Szintillatoroberfläche gekoppelt ist.

34. Strahlungsdetektionssystem nach einem der Ansprüche 29 bis 33, wobei mindestens ein Fotodetektorelement (108) Licht durch einen Lichtleiter (106) von der Szintillatoroberfläche empfängt.

35. Strahlungsdetektionssystem nach einem der Ansprüche 29 bis 34, wobei mindestens ein Teil des reflektierenden Materials (104) auf die Szintillatoroberfläche aufgebracht ist.

36. Strahlungsdetektionssystem nach einem der Ansprüche 29 bis 35, wobei mindestens ein Teil des reflektierenden Materials (104) eine zwischen der Szintillatoroberfläche und dem Fotodetektorarray (100) angeordnete Schicht umfasst.

37. Strahlungsdetektionssystem nach einem der Ansprüche 29 bis 36, wobei das reflektierende Material (104) ein Reflexionsvermögen von mehr als 80 % bei den Wellenlängen des durch den Szintillator emittierten Lichts hat.

38. Strahlungsdetektionssystem nach Anspruch 37, wobei das reflektierende Material (104) ein Reflexionsvermögen von mehr als 90 % bei den Wellenlängen des durch den Szintillator emittierten Lichts hat.

39. Strahlungsdetektionssystem nach Anspruch 38, wobei das reflektierende Material (104) ein Reflexionsvermögen von mehr als 95 % bei den Wellenlängen des durch den Szintillator emittierten Lichts hat.

40. Strahlungsdetektionssystem nach einem der Ansprüche 29 bis 39, wobei das reflektierende Material (104) Partikel in einem Medium mit niedrigem Brechungsindex umfasst.

41. Strahlungsdetektionssystem nach Anspruch 40, wobei die genannten Partikel Titandioxid umfassen.

42. Strahlungsdetektionssystem nach einem der Ansprüche 29 bis 39, wobei das reflektierende Material (104) Partikel aus Titandioxid umfasst.

43. Strahlungsdetektionssystem nach einem der Ansprüche 29 bis 42, wobei die Teile der ersten Oberfläche, von denen die Fotodetektoren (108) des mindestens einen Fotodetektorarrays (100) Licht empfangen, auf der ersten Oberfläche in einer Konfiguration angeordnet sind, die im Wesentlichen der Konfiguration der genannten Fotodetektoren (108) in dem genannten Fotodetektorarray (100) entspricht.

## Revendications

1. Système de détection de rayonnement comprenant :
une pluralité d'ensembles de photo-détecteurs (100), comprenant chacun une pluralité d'éléments photo-détecteurs sensiblement coplanaires (108) ;
un scintillateur (102), dont au moins une portion est associée à chaque élément photo-détecteur (108) ; et
un guide de lumière (106) connectant chaque élément photo-détecteur (108) à sa portion associée du scintillateur (102) ;
dans lequel des surfaces des portions du scintillateur associées aux éléments photo-détecteurs (108) de chaque ensemble de photo-détecteurs (100) comprennent une surface sensiblement coplanaire, dont le plan n'est pas parallèle au plan desdits éléments photo-détecteurs (108) ; **caractérisé en ce qu'**au moins deux des éléments photo-détecteurs adjacents (108) dans au moins un ensemble de photo-détecteurs (100) ont un espace entre eux, **en ce que** élément photo-détecteur (108) dudit ensemble de photo-détecteurs (100) génère un signal de sortie en réponse à de la lumière, et **en ce que** le système de détection de rayonnement inclut en outre au moins un conducteur (112), associé à chaque élément photo-détecteur (108) dudit ensemble de photo-détecteurs (100), pour transporter le signal de sortie depuis ledit élément photo-détecteur (108), au moins un de ces conducteurs (112) étant acheminé dans ledit espace.

2. Système de détection de rayonnement selon la revendication 1, dans lequel au moins un élément photo-détecteur (108) présente une superficie en coupe transversale dans le plan de son ensemble de photo-détecteurs (100), projetée sur la surface de scintillateur associée dans une direction perpendiculaire au plan de ladite surface de scintillateur, qui est inférieure à la superficie de la surface de la portion du scintillateur (102) associée audit élément photo-détecteur (108).

3. Système de détection de rayonnement selon l'une quelconque des revendications 1-2, dans lequel la coupe transversale du guide de lumière (106) connecté à au moins un élément photo-détecteur (108) ne s'étend pas au-delà dudit élément photo-détecteur (108) au niveau de la surface où ledit guide de lumière (106) et ledit élément photo-détecteur (108) sont connectés.

4. Système de détection de rayonnement selon l'une quelconque des revendications 1-2, dans lequel la coupe transversale du guide de lumière (106) connecté à au moins un élément photo-détecteur (108) s'étend au-delà dudit élément photo-détecteur (108) au niveau de la surface où ledit guide de lumière (106) et ledit élément photo-détecteur (108) sont connectés, et la partie de ladite surface dudit guide de lumière (106) qui s'étend au-delà dudit élément photo-détecteur (108) est recouverte d'un matériau réfléchissant (104).

5. Système de détection de rayonnement selon l'une quelconque des revendications précédentes, dans lequel le guide de lumière (106) connecté à au moins un élément photo-détecteur (108) ne recouvre pas toute la surface de la portion du scintillateur (102) associée audit élément photo-détecteur (108).

6. Système de détection de rayonnement selon l'une quelconque des revendications précédentes, dans lequel une partie du scintillateur est recouverte d'un matériau réfléchissant (104), dans un endroit qui n'est en contact avec aucun des guides de lumière (106).

7. Système de détection de rayonnement selon la revendication 6, dans lequel le scintillateur (102) est recouvert d'un matériau réfléchissant (104) sur pratiquement toutes les parties de la surface du scintillateur (102) qui ne sont en contact avec aucun des guides de lumière (106).

8. Système de détection de rayonnement selon l'une quelconque des revendications précédentes, dans lequel le scintillateur comprend une pluralité d'éléments de scintillateur (102).

9. Système de détection de rayonnement selon la revendication 8, dans lequel, pour au moins un élément photo-détecteur (108), la portion du scintillateur associée audit élément photo-détecteur (108) comprend un seul élément de scintillateur (102).

10. Système de détection de rayonnement selon la revendication 8 ou la revendication 9, dans lequel, pour au moins un élément de scintillateur (102), un seul photo-détecteur (108) est associé audit élément de scintillateur (102).

11. Système de détection de rayonnement selon l'une quelconque des revendications 8-10, dans lequel les portions du scintillateur associées aux éléments photo-détecteurs (108) d'au moins un ensemble de photo-détecteurs (100) comprennent un ensemble régulier d'éléments de scintillateur (102).

12. Système de détection de rayonnement selon l'une quelconque des revendications 8-11, dans lequel pour au moins un ensemble de photo-détecteurs (100), les éléments photo-détecteurs (108) sont associés un par un à des éléments de scintillateur (102).

13. Système de détection de rayonnement selon l'une quelconque des revendications 8-12, dans lequel une partie d'au moins un élément de scintillateur (102) est recouverte d'un matériau réfléchissant (104), dans un endroit qui n'est en contact avec aucun des guides de lumière (106).

14. Système de détection de rayonnement selon la revendication 13, dans lequel ledit élément de scintillateur (102) est recouvert d'un matériau réfléchissant (104) dans pratiquement tous les endroits qui ne sont en contact avec aucun des guides de lumière (106).

15. Système de détection de rayonnement selon l'une quelconque des revendications 4, 6, 7, 13 ou 14, dans lequel au moins une partie du matériau réfléchissant (104) amène la lumière à subir une réflexion sensiblement spéculaire.

16. Système de détection de rayonnement selon l'une quelconque des revendications 4, 6, 7, ou 13-15, dans lequel au moins une partie du matériau réfléchissant (104) amène la lumière à subir une réflexion sensiblement diffuse.

17. Système de détection de rayonnement selon l'une quelconque des revendications 4, 6, 7, ou 13-16, dans lequel le matériau réfléchissant (104) présente un pouvoir de réflexion supérieur à 80 % aux longueurs d'onde de lumière émise par le scintillateur.

18. Système de détection de rayonnement selon la revendication 17, dans lequel le matériau réfléchissant (104) présente un pouvoir de réflexion supérieur à 90 %, aux longueurs d'onde de lumière émise par le scintillateur.

19. Système de détection de rayonnement selon la revendication 18, dans lequel le matériau réfléchissant (104) présente un pouvoir de réflexion supérieur à 95 % aux longueurs d'onde de lumière émise par le scintillateur.

20. Système de détection de rayonnement selon l'une quelconque des revendications précédentes, dans lequel au moins un des guides de lumière (106) comprend un conduit de lumière.

21. Système de détection de rayonnement selon l'une quelconque des revendications précédentes, dans lequel au moins un des guides de lumière (106) comprend une fibre optique.

22. Système de détection de rayonnement selon la revendication 21, dans lequel au moins un des guides de lumière (106) comprend un faisceau de fibres optiques.

23. Système de détection de rayonnement selon l'une quelconque des revendications précédentes, dans lequel au moins un ensemble de photo-détecteurs (100) comporte un bord libre.

24. Système de détection de rayonnement selon la revendication 23 dans lequel au moins un ensemble de photo-détecteurs (100) avec un bord libre comporte de l'électronique de détection (400) juxtaposée audit bord libre.

25. Système de détection de rayonnement selon la revendication 24, dans lequel l'électronique de détection (400) comprend un ASIC.

26. Système de détection de rayonnement selon la revendication 24 ou la revendication 25 et incluant un écran de protection contre le rayonnement (402) entre ladite électronique de détection (400) et une source de rayonnement que le système de détection de rayonnement est configuré pour détecter.

27. Système de détection de rayonnement selon l'une quelconque des revendications 23-26, et incluant un faisceau de conducteurs (112) transportant des courants de sortie depuis une pluralité d'éléments photo-détecteurs (108) dans au moins un des au moins un ensemble de photo-détecteurs (100) avec un bord libre, dans lequel le faisceau de conducteurs (112) est acheminé le long du bord libre.

28. Système de détection de rayonnement selon l'une quelconque des revendications précédentes, dans lequel les guides de lumière (106) connectant lesdits éléments photo-détecteurs (108) à leurs portions de scintillateur associées suivent des chemins sensiblement droits.

29. Système de détection de rayonnement comprenant :
au moins un ensemble de photo-détecteurs (100) ;
un scintillateur comprenant une première surface faisant face à au moins un des au moins un ensembles de photo-détecteurs (100), et au moins une autre surface ne faisant face à aucun des au moins un ensembles de photo-détecteurs (100) ; et
un matériau réfléchissant (104) recouvrant une partie, mais pas la totalité, de la première surface et au moins une partie des au moins une autres surfaces ;
dans lequel au moins une partie de la lumière provenant du scintillateur (102), laquelle lumière frappe la partie de la première surface non recouverte par le matériau réfléchissant (104), traverse la première surface jusqu'à l'un des éléments photo-détecteurs (108), et au moins une partie de la lumière qui frappe la partie de la première surface recouverte par le matériau réfléchissant (104) se réfléchit depuis le matériau réfléchissant de retour dans le scintillateur (102), et atteint l'un des éléments photo-détecteurs (108) après une ou plusieurs réflexions depuis le matériau réfléchissant (104) adjacent à l'une des au moins une autres surfaces,
**caractérisé en ce que** l'au moins un ensemble de photo-détecteurs (100) comprend une pluralité d'éléments photo-détecteurs (108) et qu'au moins deux des éléments photo-détecteurs adjacents (108) dans au moins un ensemble de photo-détecteurs (100) comportent un espace entre eux, **en ce que** chaque élément photo-détecteur (108) dudit ensemble de photo-détecteurs (100) génère un signal de sortie en réponse à de la lumière, et **en ce que** le système de détection de rayonnement inclut en outre au moins un conducteur (112), associé à chaque élément photo-détecteur (108) dudit ensemble de photo-détecteurs (100), pour transporter le signal de sortie depuis ledit élément photo-détecteur (108), au moins un de ces conducteurs (112) est acheminé dans ledit espace.

30. Système de détection de rayonnement selon la revendication 29, dans lequel au moins un des éléments photo-détecteurs (108) reçoit une partie de la lumière qui se déplace directement depuis le scintillateur sans réfléchir par le matériau réfléchissant (104), et une partie de la lumière qui se réfléchit depuis le matériau réfléchissant (104) au moins une fois.

31. Système de détection de rayonnement selon la revendication 29 ou la revendication 30, dans lequel pratiquement la totalité de la lumière provenant du scintillateur traversant la première surface soit atteint l'un des éléments photo-détecteurs (108), soit se réfléchit depuis le matériau réfléchissant (104) de retour dans le scintillateur (102).

32. Système de détection de rayonnement selon l'une quelconque des revendications 29-31, dans lequel au moins un élément photo-détecteur (108) est en contact avec la surface de scintillateur.

33. Système de détection de rayonnement selon la revendication 32, dans lequel au moins un desdits au moins un éléments photo-détecteurs (108) est optiquement couplé à la surface de scintillateur par une couche d'adhésif optique.

34. Système de détection de rayonnement selon l'une quelconque des revendications 29-33, dans lequel au moins un élément photo-détecteur (108) reçoit de la lumière en provenance de la surface de scintillateur à travers un guide de lumière (106).

35. Système de détection de rayonnement selon l'une quelconque des revendications 29-34, dans lequel au moins une partie du matériau réfléchissant (104) est étalée sur la surface de scintillateur.

36. Système de détection de rayonnement selon l'une quelconque des revendications 29-35, dans lequel au moins une partie du matériau réfléchissant (104) comprend une couche située entre la surface de scintillateur et l'ensemble de photo-détecteurs (100).

37. Système de détection de rayonnement selon l'une quelconque des revendications 29-36, dans lequel le matériau réfléchissant (104) présente un pouvoir de réflexion supérieur à 80 % aux longueurs d'onde de lumière émise par le scintillateur.

38. Système de détection de rayonnement selon la revendication 37, dans lequel le matériau réfléchissant (104) présente un pouvoir de réflexion supérieur à 90 %, aux longueurs d'onde de lumière émise par le scintillateur.

39. Système de détection de rayonnement selon la revendication 38, dans lequel le matériau réfléchissant (104) présente un pouvoir de réflexion supérieur à 95 % aux longueurs d'onde de lumière émise par le scintillateur.

40. Système de détection de rayonnement selon l'une quelconque des revendications 29-39, dans lequel le matériau réfléchissant (104) comprend des particules dans un milieu à indice de réfraction faible.

41. Système de détection de rayonnement selon la revendication 40, dans lequel lesdites particules comprennent du dioxyde de titane.

42. Système de détection de rayonnement selon l'une quelconque des revendications 29-39, dans lequel le matériau réfléchissant (104) comprend des particules de dioxyde de titane.

43. Système de détection de rayonnement selon l'une quelconque des revendications 29-42, dans lequel les parties de la première surface depuis lesquelles les photo-détecteurs (108) d'au moins un ensemble de photo-détecteurs (100) reçoivent la lumière, sont agencées sur la première surface dans une configuration sensiblement similaire à la configuration desdits photo-détecteurs (108) dudit ensemble de photo-détecteurs (100).
